(19)

Europäisches
Patentamt
European
Patent Office
Office européen
des brevets

(11) **EP 2 270 954 A2**

(12) **EUROPEAN PATENT APPLICATION**

(43) Date of publication:
**05.01.2011 Bulletin 2011/01**

(51) Int Cl.:
***H02K 1/27*** (2006.01)

(21) Application number: **10003157.4**

(22) Date of filing: **24.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **30.06.2009 JP 2009156073**

(71) Applicant: **SANYO ELECTRIC CO., LTD.
Moriguchi-shi, Osaka 570-8677 (JP)**

(72) Inventors:
• **Arai, Kazuhiko
Moriguchi-shi, Osaka 570-8677
(JP)**

• **Yanashima, Toshihito
Moriguchi-shi, Osaka 570-8677
(JP)**
• **Takezawa, Masaaki
Moriguchi-shi, Osaka 570-8677
(JP)**
• **Dei, Yoshikazu
Moriguchi-shi, Osaka 570-8677
(JP)**
• **Adachi, Hidekazu
Moriguchi-shi, Osaka 570-8677
(JP)**

(74) Representative: **Glawe, Delfs, Moll
Patent- und Rechtsanwälte
Postfach 26 01 62
80058 München (DE)**

(54) **Rotor of electric motor**

(57) There is disclosed a rotor of an electric motor, which can decrease the generation of noises. In the rotor of the electric motor, comprising a rotor core formed by laminating a plurality of iron plates for the rotor; insertion holes corresponding to magnetic poles of the rotor core and provided along the axial direction of a rotary shaft; and a pair of flat plate-like permanent magnets inserted into each of the insertion holes to constitute the magnetic pole, the insertion holes are formed into such a V-shape as to project toward the outer periphery of the rotor core, and $0 < t1/t2 \leq 0.15$ is satisfied in which t1 is the shortest distance from the outer end of the insertion hole to the outer periphery of the rotor core and t2 is a width dimension of each of the permanent magnets.

FIG. 3

EP 2 270 954 A2

**Description**

BACKGROUND OF THE INVENTION

The present invention relates to a structure of a rotor of an electric motor used for a compressor or the like.

Heretofore, this type of electric motor for the compressor is constituted of a ring-shaped stator attached to an inner wall of a sealed container and a rotor disposed on the inner side of the stator. This stator has, for example, a constitution in which stator coils of three phases of U, V and W-phases are directly wound around tooth portions of a stator core formed by laminating a plurality of electromagnetic steel plates.

Moreover, the rotor has a constitution in which a plurality of iron plates for the rotor are laminated and fixed by caulking, thereby forming a rotor core. Furthermore, permanent magnets constituting magnetic poles are inserted into insertion holes formed along the outer peripheral side of this rotor core. In addition, a current is caused to flow through the three-phase stator coils wound around the tooth portions of the stator in order, and a driving force is generated by an interaction between a varying magnetic field of the current and a magnetic field of the permanent magnets (e.g., see Japanese Patent Application Laid-Open No. 2007-174776 (Patent Document 1) or 2008-022666 (Patent Document 2)).

However, in such an electric motor, heretofore, it has been known that a magnetic flux noticeably varies with respect to the rotation of the rotor and that a large suction force is periodically generated between the tooth portions of the stator core and the magnets of the rotor. Such a large suction force generated periodically has caused a problem that the stator core is deformed, thereby generating noises.

SUMMARY OF THE INVENTION

The present invention has been developed to solve such a conventional technical problem, and an object thereof is to provide a rotor of an electric motor which can decrease the generation of noises.

That is, according to a first aspect of the present invention, there is provided a rotor of an electric motor, comprising: a rotor core formed by laminating a plurality of iron plates for the rotor; a pair of insertion holes corresponding to each magnetic pole of the rotor core and provided along the axial direction of a rotary shaft; and a pair of flat plate-like permanent magnets inserted into the insertion holes to constitute the magnetic pole, wherein the pair of insertion holes are disposed in the form of a slanted roof when seen from the side of the rotary shaft, and $0 < t1/t2 \leq 0.15$ is satisfied in which t1 is the shortest distance from the center of a line connecting outer ends of the adjacent insertion holes to the outer periphery of the rotor core and t2 is a width dimension of each of the permanent magnets.

According to a second aspect of the present invention, there is provided a rotor of an electric motor, comprising: a rotor core formed by laminating a plurality of iron plates for the rotor; insertion holes corresponding to magnetic poles of the rotor core and provided along the axial direction of a rotary shaft; and a pair of flat plate-like permanent magnets inserted into each of the insertion holes to constitute the magnetic pole, wherein the insertion holes are formed into such a V-shape as to project toward the outer periphery of the rotor core, and $0 < t1/t2 \leq 0.15$ is satisfied in which t1 is the shortest distance from the outer end of the insertion hole to the outer periphery of the rotor core and t2 is a width dimension of each of the permanent magnets.

The rotor of the electric motor of a third aspect of the present invention is characterized in that in the above aspects of the present invention, the permanent magnets are rare earth magnets.

The rotor of the electric motor of a fourth aspect of the present invention is characterized in that in any one of the first to third aspects of the present invention, the outer peripheral surface of the rotor core in front of the magnetic pole in a rotating direction thereof is provided with cutout portions.

According to the first aspect of the present invention, in the rotor of the electric motor, comprising the rotor core formed by laminating the plurality of iron plates for the rotor, the pair of insertion holes corresponding to the magnetic pole of the rotor core and provided along the axial direction of the rotary shaft and the pair of flat plate-like permanent magnets inserted into the insertion holes to constitute the magnetic pole, the pair of insertion holes are disposed in the form of the slanted roof when seen from the side of the rotary shaft. Therefore, the pair of permanent magnets can be disposed in the pair of insertion holes in the form of the slanted roof when seen from the side of the rotary shaft, and magnetic force lines generated by the permanent magnets can be scattered. In particular, in the case of $0 < t1/t2 \leq 0.15$ in which t1 is the shortest distance from the center of the line connecting the outer ends of the adjacent insertion holes to the outer periphery of the rotor core and t2 is the width dimension of each of the permanent magnets, a distance from the adjacent outer ends of the pair of permanent magnets inserted into the insertion holes to the outer periphery of the rotor core can be shortened, whereby the variance ratio of the magnetic force line flowing through the rotor core can be decreased.

In consequence, a suction force periodically applied in a concentrated manner can be decreased, and the variance of the suction force can be decreased, whereby the deformation of a stator core can be suppressed, and the generation of noises due to the deformation can effectively be suppressed.

According to the second aspect of the present invention, in the rotor of the electric motor, comprising the rotor core formed by laminating the plurality of iron plates for the rotor, the insertion holes corresponding to the magnetic poles of this rotor core and provided along the axial direction of the rotary shaft and the pair of flat plate-like permanent magnets inserted into each of the insertion holes to constitute the magnetic pole, the insertion holes are formed into such a V-shape as to project toward the outer periphery of the rotor core. Therefore, the pair of permanent magnets can be disposed in each insertion hole in the form of the slanted roof when seen from the side of the rotary shaft, and magnetic force lines generated by the permanent magnets can be scattered. In particular, in the case of $0 < t1/t2 \leq 0.15$ in which $t1$ is the shortest distance from the outer end of the insertion hole to the outer periphery of the rotor core and $t2$ is the width dimension of each of the permanent magnets, a distance from adjacent outer ends of the pair of permanent magnets inserted into the insertion holes to the outer periphery of the rotor core can be shortened, whereby the variance ratio of the magnetic force line flowing through the rotor core can be decreased.

In consequence, a suction force periodically applied in a concentrated manner can be decreased, and the variance of the suction force can be decreased, whereby the deformation of a stator core can be suppressed, and the generation of noises due to the deformation can effectively be suppressed.

In particular, the above aspects of the present invention are effective in a case where as in the third aspect of the present invention, the permanent magnets are the rare earth magnets having high material cost and processing cost and formed mainly into a planar shape. Furthermore, in the rare earth permanent magnets, the holding force of the magnets increases, and the excitation of a stator due to the suction force increases as compared with ferrite permanent magnets. Therefore, the permanent magnets have a problem that the vibration thereof is transmitted to a surrounding area, thereby increasing the noises. However, according to the first or second aspect of the present invention, the problem of the noises can be suppressed. Therefore, the first or second aspect of the present invention becomes more valid and effective in a case where the permanent magnets are the rare earth magnets as in the third aspect of the present invention.

Furthermore, when the outer peripheral surface of the rotor core in front of the magnetic pole in the rotating direction thereof is provided with cutout portions as in the fourth aspect of the present invention, the variance of the magnetic force line can be optimized, and the vibration of the stator can be decreased.

BRIEF DESCRIPTION OF THE DRAWINGS

FIG. 1 is a vertical side view of a compressor to which the present invention is applied;
FIG. 2 is a plan view of a stator core of a stator of an electric motor of FIG. 1;
FIG. 3 is a plan view of a rotor according to one embodiment of the present invention (Embodiment 1);
FIG. 4 is a side view of the rotor of FIG. 3;
FIG. 5 is a partially enlarged view in a state where permanent magnets are inserted into an insertion hole of the rotor of FIG. 3;
FIG. 6 is an enlarged view of a broken line part of FIG. 5;
FIG. 7 is a diagram showing the variance of the vibration value of the stator core with respect to (t1/t2);
FIG. 8 is a diagram showing positional relations between a stator and the permanent magnets of the rotor at rotation angles;
FIG. 9 is a diagram showing magnetic fluxes of an electric motor comprising a conventional rotor and an electric motor comprising a rotor of the present invention at the rotation angles of FIG. 8;
FIG. 10 is a partially enlarged view of FIG. 9;
FIG. 11 is a diagram showing a three-phase sinusoidal wave;
FIG. 12 is a diagram showing the variance of a suction force;
FIG. 13 is a partially enlarged view of another rotor provided with insertion holes having a shape different from that of FIG. 3;
FIG. 14 is an enlarged view of a broken line part of FIG. 13;
FIG. 15 is a plan view showing one example of a rotor provided with insertion holes having a shape different from that of FIG. 13;
FIG. 16 is a plan view showing another example of the rotor provided with the insertion holes having the shape different from that of FIG. 13;
FIG. 17 is a plan view of a rotor of another embodiment (Embodiment 2); and
FIG. 18 is a plan view of a stator corresponding to the rotor of FIG. 16.

DETAILED DESCRIPTION OF THE PREFERRED EMBODIMENTS

Hereinafter, embodiments of the present invention will be described in detail with reference to the drawings.

(Embodiment 1)

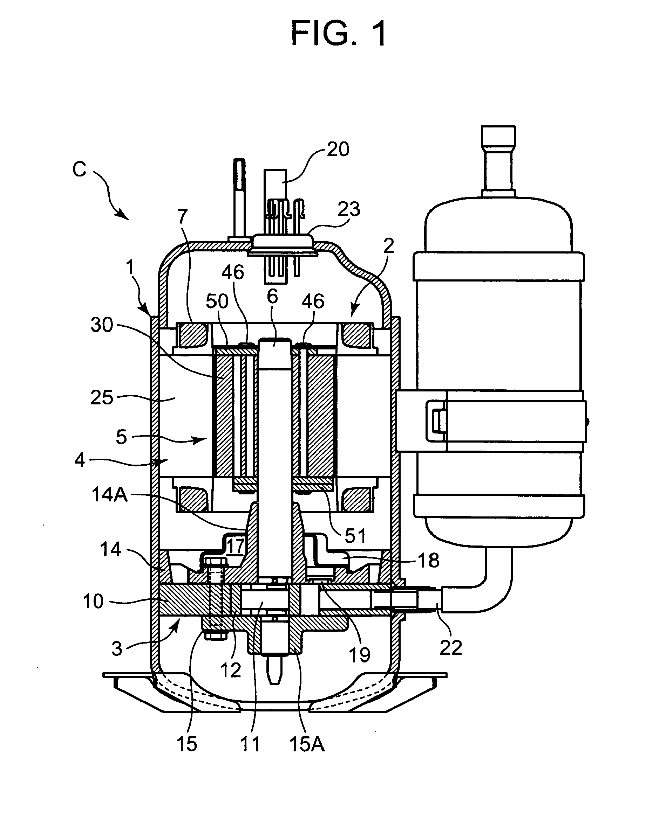

FIG. 1 is a vertical side view of a compressor C to which a rotor of an electric motor of the present invention is applied. In FIG. 1, reference numeral 1 is a sealed container. An electric motor (a brushless DC motor) 2 is received on the upside in the container, and a compression element 3 driven and rotated by the electric motor 2 is received on the downside in the container. The sealed container 1 is beforehand divided into two parts where the electric motor 2 and the compression element 3 are received, and then hermetically closed by high-frequency sealing. It is to be noted that the present embodiment will be described by use of a rotary compressor as the compressor C, but the present invention is not limited to the compressor, and is effective even in a case where, for example, a reciprocating or scroll type compressor or the like is used.

The electric motor 2 is constituted of a stator 4 attached to an inner wall of the sealed container 1, and a rotor 5 disposed on the inner side of the stator 4 and supported rotatably around a rotary shaft 6. It is to be noted that in the electric motor 2 of the present embodiment, a four-pole permanent magnet rotary type electric motor is used in which a ratio between the number of poles of the rotor 5 and the number of slots of the stator 4 is 2:3.

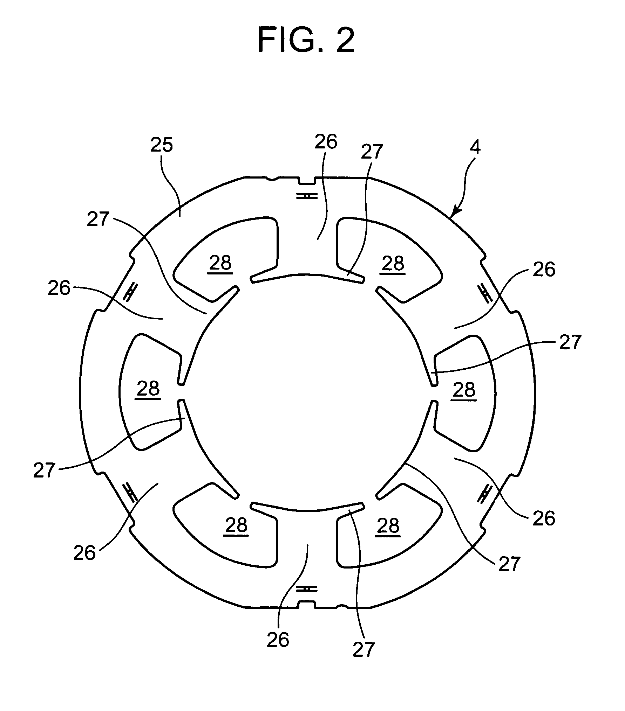

As shown in FIG. 2, the stator 4 is constituted of a stator core 25 having a constitution in which electromagnetic steel plates are laminated, and a stator coil 7 (not shown in FIG. 2) wound around the stator core 25. Specifically, the stator core 25 is provided with tooth portions 26 each having a predetermined width, and the tip of each of the tooth portions 26 is extended to both arms, thereby forming a tooth tip portion 27 along the surface of the rotor 5. The stator coil 7 for excitation is directly wound around each tooth portion 26 by use of a space of a slot portion 28, and magnetic poles of the stator 4 are formed by a concentrated direct winding system. The stator coil 7 has a three-phase constitution of U, V and W-phases.

On the other hand, the compression element 3 is constituted of a cylinder 10 in which a compression chamber is formed; a roller 12 fitted into an eccentric portion 11 provided on the rotary shaft 6 to eccentrically rotate in the cylinder 10; a vane (not shown) which abuts on the roller 12 to partition the compression chamber of the cylinder 10 into a low pressure chamber side and a high pressure chamber side; an upper support member 14 which closes the open surface of the cylinder 10 on one side thereof (the upside in FIG. 1) and which is also used as a bearing 14A of the rotary shaft 6; and a lower support member 15 which closes the open surface of the cylinder on the other side thereof (the downside in FIG. 1) and which is also used as a bearing 15A of the rotary shaft 6.

In FIG. 1, reference numeral 17 is a discharge muffler chamber. This discharge muffler chamber 17 is formed by covering a part of the upper support member 14 on the side of the electric motor 2 (the upside) with a cover 18. The inside of the discharge muffler chamber 17 is connected to the high pressure chamber side of the cylinder 10 via a discharge port 19. Moreover, the cover 18 is provided with a communication hole (not shown) which connects the inside of the discharge muffler chamber 17 to the inside of the sealed container 1, and a refrigerant in the discharge muffler chamber 17 is discharged into the sealed container 1 through the communication hole.

Moreover, reference numeral 20 is a refrigerant discharge tube for discharging, to the outside of the compressor C, a high-temperature high-pressure refrigerant gas discharged into the sealed container 1. The refrigerant discharge tube is attached to the upper end of the sealed container 1. Reference numeral 22 is a refrigerant introducing tube for introducing a low-temperature low-pressure refrigerant into the cylinder 10 from the outside of the compressor C. Moreover, reference numeral 23 is a terminal for supplying a power from the outside of the sealed container 1 to the stator coil 7 of the stator 4, and the terminal is attached around the center of the upper end of the sealed container 1. The terminal 23 is connected to the stator coil 7 via a lead wire (not shown).

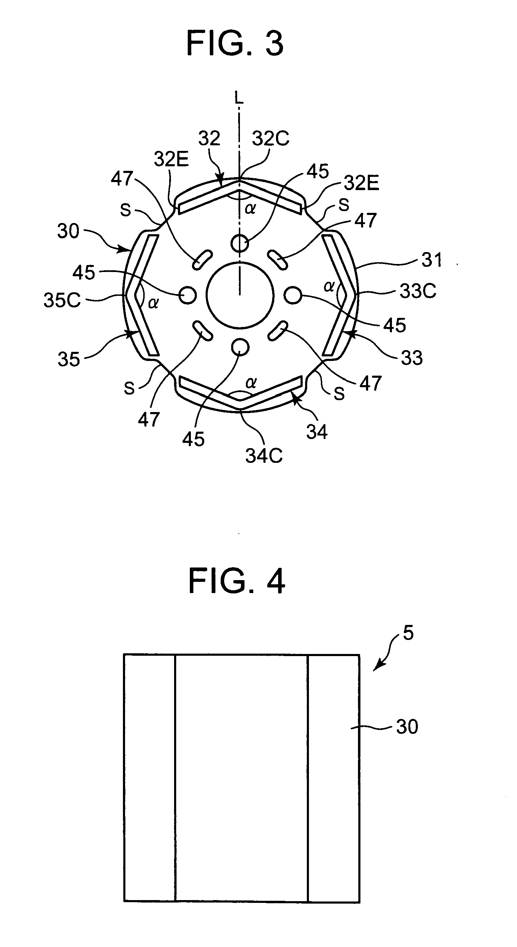

Next, the rotor 5 of the electric motor 2 will be described in detail. FIG. 3 is a plan view of the rotor 5 of one embodiment to which the present invention is applied (a state before permanent magnets are inserted), and FIG. 4 is a side view of the rotor 5 of FIG. 3.

In the drawing, reference numeral 30 is a rotor core. Electromagnetic steel plates having thicknesses of 0.35 mm to 0.50 mm are punched into a shape shown in FIG. 3, and a plurality of resultant rotor iron plates 31 are stacked, mutually caulked and integrally laminated. If the thickness of the rotor iron plate 31 is excessively increased, a problem occurs that an eddy current loss increases. This eddy current loss is a loss caused by the generation of the current based on the variance of a magnetic flux in the core 30. The eddy current loss can be decreased by decreasing the thickness of the core 30. However, if the thickness of the rotor iron plate 31 is excessively decreased, it becomes difficult to process the plate, or a problem occurs that processability and processing precision lower. In consideration of such problems, it is preferable to use the rotor iron plate 31 having a thickness of 0.35 mm to 0.50 mm as described above, and in the present embodiment, the rotor iron plate 31 having a thickness of 0.35 mm is used.

Moreover, in the present embodiment, since the four-pole rotor 5 is employed as described above, as shown in FIG. 3, four insertion holes 32 to 35 corresponding to the magnetic poles of the rotor core 30 are formed in the rotor iron plate 31 by punching.

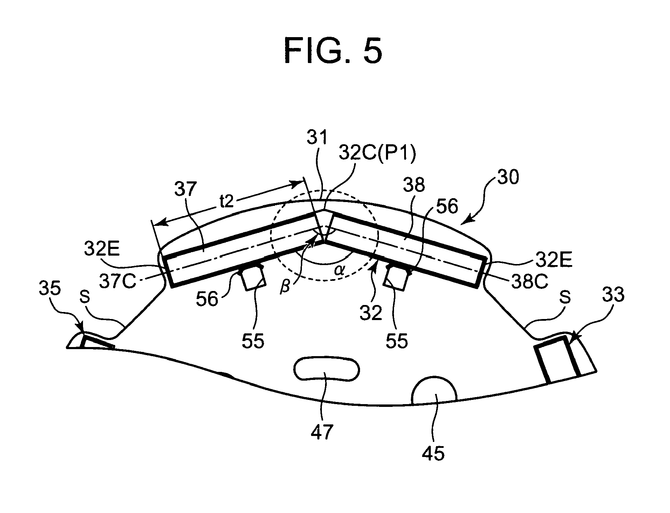

As shown in FIG. 5, the insertion holes 32 to 35 are provided along the axial direction of the rotary shaft 6. The insertion holes 32 to 35 are formed into such a V-shape as to project toward the outer periphery of the rotor core 30. Specifically, the insertion holes 32 to 35 are formed so that centers (hereinafter referred to as the outer ends) 32C to 35C are positioned on the most distant outer peripheral side when seen from a rotary shaft 6 side and so that each insertion hole extends to both sides so as to tilt inwardly (the rotary shaft 6 side) from each of the outer ends 32C to 35C symmetrically with respect to a straight line (e.g., a broken line L) connecting the axial center of the rotary shaft 6 to each of the outer ends 32C to 35C. In consequence, an angle α formed by tips (e.g., 32E, 32E) of each of the insertion holes 32 to 35 and the outer end thereof (32C) is a predetermined obtuse angle, and the whole insertion hole has a substantially rectangular shape (V-shape).

A pair of flat plate-like permanent magnets 37 to 44 which are rare earth magnets are inserted into the insertion holes 32 to 35, respectively. In the present embodiment, since the four-pole rotor 5 is employed as described above, four pairs of permanent magnets are provided. Specifically, two permanent magnets 37, 38 forming a pair are inserted into the insertion hole 32, two permanent magnets 39, 40 forming a pair are inserted into the insertion hole 33, two permanent magnets 41, 42 forming a pair are inserted into the insertion hole 34, and two permanent magnets 43, 44 forming a pair are inserted into the insertion hole 35, thereby constituting magnetic poles, respectively.

Moreover, as shown in FIG. 3, in the rotor 5, the outer peripheral surface of the rotor core 30 in front of the magnetic pole in a rotating direction thereof is provided with cutout portions S, respectively.

It is to be noted that in FIG. 3, reference numerals 45 are through holes into which rivets 46 for integrally combining, with the rotor core 30, nonmagnetic end face members 50, 51 attached to both end faces of the rotor core 30 are inserted, and reference numerals 47 are air holes. In the present embodiment, as shown in FIG. 3, the rotor 5 is provided with four through holes 45 and four air holes 47, and these holes are alternately provided with a substantially equal interval and at a substantially equal radius from the rotary shaft 6 as the center. However, the positions and numbers of the through holes 45 and the air holes 47 are preferably appropriately determined in consideration of the arrangement of the permanent magnets 37 to 44 or the like so that characteristics and efficiency do not lower, and the present invention is not limited to the arrangement and the numbers of the present embodiment.

Here, attention is focused on one of four magnetic poles of the rotor 5, and the insertion hole into which the pair of permanent magnets are inserted and the permanent magnets inserted into this insertion hole will be described in detail. FIG. 5 is a partially enlarged view around the insertion hole 32 of the rotor 5 in a state where the permanent magnets 37 to 44 are inserted into the insertion holes 32 to 35, respectively. It is to be noted that here, as shown in FIG. 5, the insertion hole 32 constituting one of the four magnetic poles of the rotor 5 and the pair of permanent magnets 37, 38 inserted into the insertion hole 32 will be described, and the description of the other insertion holes 33 to 35 and permanent magnets 39 to 44 inserted into the insertion holes 33 to 35 is omitted. However, the insertion holes 33 to 35 and the permanent magnets 39 to 44 have constitutions and arrangements similar to those of the insertion hole 32 and the permanent magnets 37, 38.

In FIG. 5, reference numerals 55, 55 are holes formed so as to extend through the plurality of rotor iron plates 31 positioned at both end faces of the rotor 5, and connected to the insertion hole 32. Reference numerals 56, 56 are thin fixing members provided between the holes 55 and 55 and the insertion hole 32 and configured to fix the permanent magnets 37, 38, respectively. It is to be noted that in FIG. 3, these holes 55 and the fixing members 56 are omitted, but the plurality of rotor iron plates 31 positioned at both the end faces of the rotor 5 are provided with the holes 55 connected to the insertion holes 33 to 35 in the same manner as in the insertion hole 32, and the fixing members 56.

According to such a constitution, after inserting the permanent magnets 37 to 44 into the insertion holes 32 to 35, the fixing members 56 are pressed from the holes 55 toward the permanent magnets 37 to 44 (i.e., from the rotary shaft 6 side to the outer peripheral side of the rotary shaft), whereby both upper and lower ends of each permanent magnet can be held by the fixing members 56 and the inner walls of the insertion holes 32 to 35. Afterward, the end face members 50, 51 are attached to both the end faces of the rotor 5, and are integrally combined by the rivets 46. It is to be noted that in the present embodiment, as described above, after inserting the permanent magnets 37 to 44 into the insertion holes 32 to 35, the fixing members 56 are pressed from the holes 55 toward the permanent magnets 37 to 44 and held, but the present invention is not limited to this embodiment. For example, the fixing members may be projected into the insertion holes 32 to 35, and the permanent magnets 37 to 44 may be pressed into the insertion holes 32 to 35, respectively.

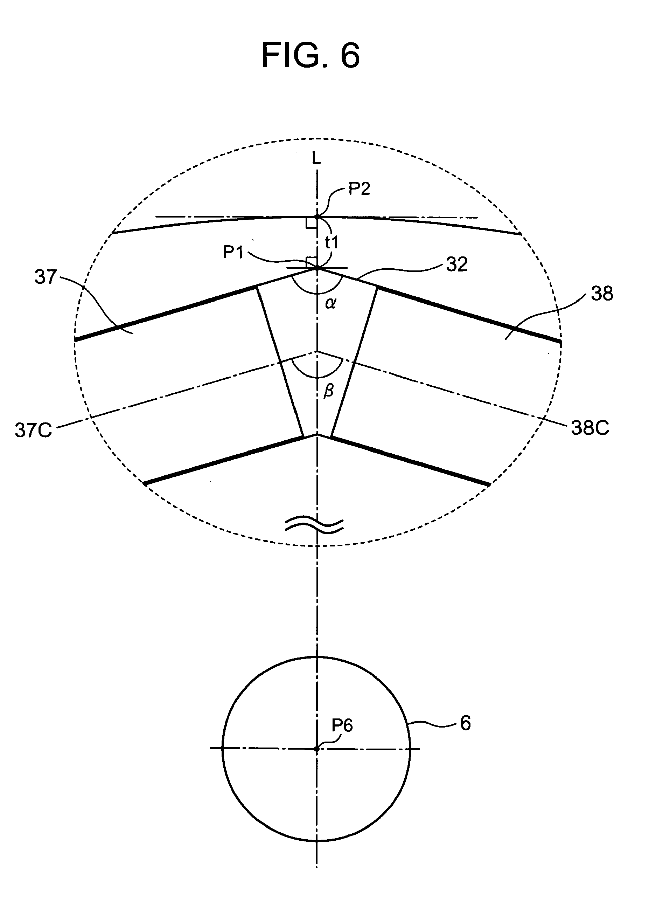

On the other hand, FIG. 6 is an enlarged view of a broken line part of FIG. 5. As shown in FIGS. 5 and 6, an angle β at which a center line 37C of one permanent magnet 37 of the pair of permanent magnets inserted into the insertion hole 32 in a width direction intersects with a center line 38C of the other permanent magnet 38 in the width direction is substantially equal to an angle α (the above predetermined obtuse angle) formed by the tips 32E, 32E of the insertion hole 32 and the outer end 32C of the insertion hole.

In this case, the insertion hole 32 is formed so as to satisfy the following formula (1), in which t1 is the shortest distance from the outer end 32C of the insertion hole 32 (i.e., P1 shown in FIG. 6) to an outer periphery P2 of the rotor core 30 and t2 is the width dimension of the permanent magnet. It is to be noted that as shown in FIG. 6, in the present embodiment, the outer end P1 of the insertion hole 32, the outer periphery P2 of the rotor core 30 and an axial center P6 of the rotary shaft 6 are present on substantially the same straight line L.

$$0 < t1/t2 \leq 0.15 \quad ... \quad (1)$$

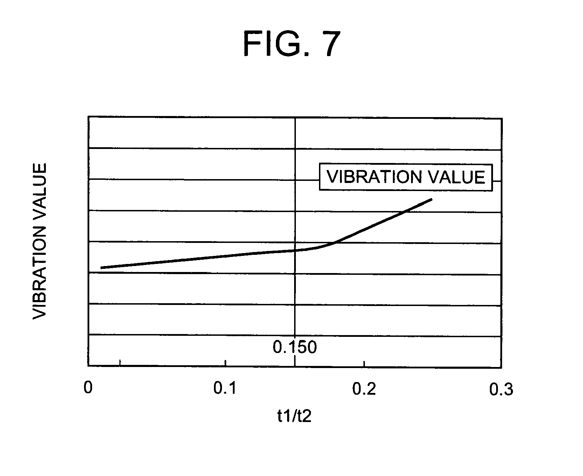

FIG. 7 shows the variance of the vibration value of the stator core with respect to t1/t2. It is seen from FIG. 7 that when the value of t1/t2 is 0.15 or less, the vibration value of the stator core 25 moderately increases with the increase of t1/t2 but that when the value of t1/t2 is larger than 0.15, the vibration value rapidly increases. To solve the problem, in the present invention, the insertion hole into which the pair of permanent magnets are inserted and the respective permanent magnets, that is, the insertion holes 32 to 35 and the permanent magnets 37 to 44 are arranged so that the vibration value of the stator core is smaller than that of an inflection point at which the moderate increase of the vibration value of the stator core changes to the rapid increase thereof, that is, so that the above formula (1) is satisfied.

In particular, according to the present embodiment, the insertion holes 32 to 35 and the pair of permanent magnets have a constitution which satisfies the following formulas (2), (3) in addition to the above formula (1).

$$0.35 \ mm \leq t1 \leq 1.80 \ mm \quad ... \quad (2)$$

$$12 \ mm \leq t2 \leq 15 \ mm \quad ... \quad (3)$$

The lower limit value (i.e., 0.35 mm) of t1 shown in the above formula (2) is based on the dimension (the thickness) of each rotor iron plate 31 constituting the rotor core 30 in a rotary shaft 6 direction. That is, the magnetic flux preferably stepwise passes through the rotor core 30, as t1 is small (i.e., the variance ratio of the magnetic force line flowing through the rotor core 30 decreases). However, when the lower limit value is smaller than the dimension of the rotor iron plate 31 constituting the rotor core 30 in the rotary shaft 6 direction, processing precision extremely lowers. Therefore, from the viewpoint of this problem of the processing precision, the value cannot be smaller than the dimension of the rotor iron plate 31 in the rotary shaft 6 direction. In the present embodiment, since the rotor iron plate 31 having a dimension of 0.35 mm in the rotary shaft 6 direction is used as described above, t1 is also set to 0.35 mm or more.

Moreover, as to t2 shown in the above formula (3), an upper limit value (i.e., 15 mm) is determined from the problem of the iron loss of the rotor core 30, and a lower limit value (i.e., 12 mm) is determined from the problem of the magnetic flux. Specifically, when t2 is larger than 15 mm, the iron loss of the rotor core 30 increases, and efficiency disadvantageously remarkably deteriorates.

Moreover, when the value is smaller than t2, the above iron loss decreases. However, when the value is smaller than 12 mm, the magnetic flux (the magnetic force line) excessively decreases. Also in this case, there occurs a problem that the efficiency remarkably lowers. To solve the problem, t2 is set to such a range as to satisfy the above formula (3), whereby such deterioration of the efficiency can be prevented. It is to be noted that the upper limit value (1.8 mm) of the above formula (2) can be determined in accordance with the above formulas (1) and (3).

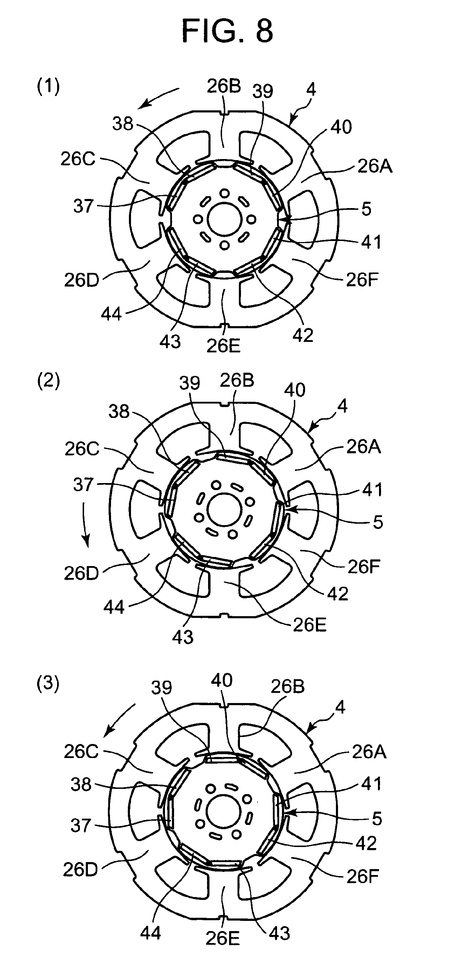

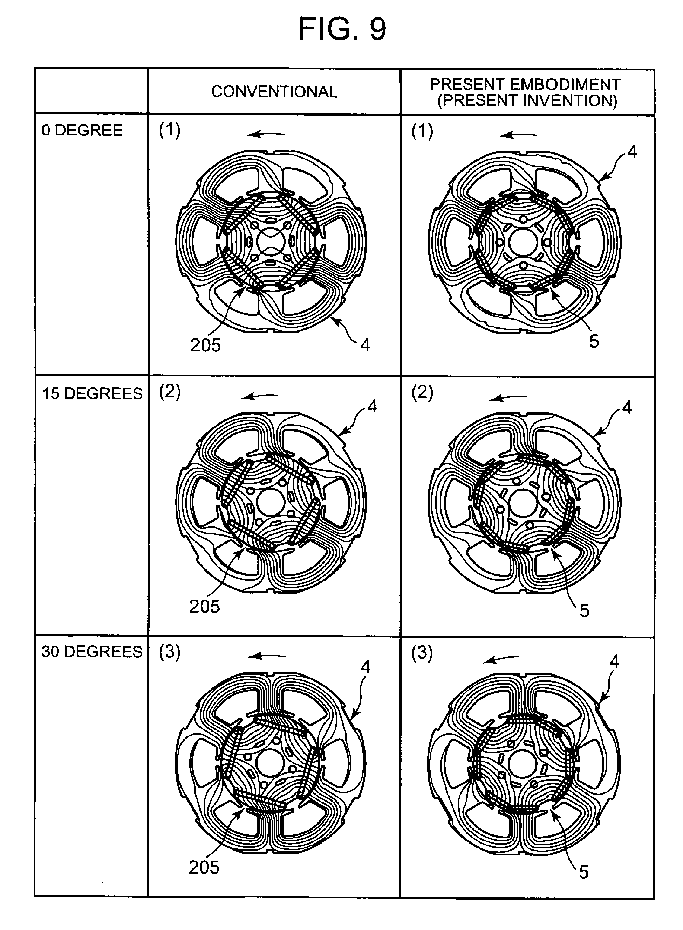

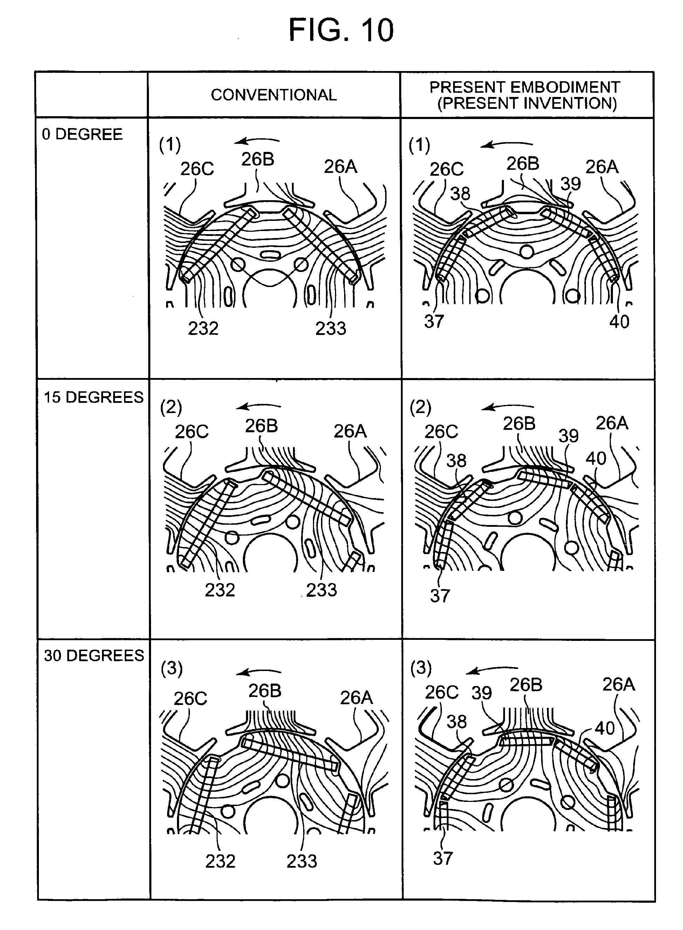

FIG. 8 is a diagram showing the positions of the permanent magnets 37 to 44 in the stator 4 at the respective rotation angles of the rotor 5 in the present embodiment, FIG. 9 is a diagram showing magnetic fluxes at the respective rotation angles shown in FIG. 8, and FIG. 10 is a partially enlarged view of FIG. 9. In this case, the stator coil 7 of the U-phase is directly wound around tooth portions 26A, 26D of the stator core 25, the coil of the V-phase is directly wound around tooth portions 26B, 26E, and the coil of the W-phase is directly wound around tooth portions 26C, 26F. In the diagrams, an arrangement shown in (1) corresponds to a rotation angle of 0 degree of the rotor 5, (2) shows that the rotor 5 has been rotated from (1) in an arrow direction, and (3) shows that the rotor 5 has further been rotated as much as 15 degrees from (2) (the rotor 5 has been rotated as much as 30 degrees from (1)). It is to be noted that in FIGS. 8 to 10, the insertion holes 32 to 35 are omitted. In FIGS. 9 and 10, the right column shows the rotor 5 of the embodiment to which the present invention is applied, and the left column shows a rotor 205 having a conventional structure.

As shown in FIG. 10, at a rotation angle of, for example, 0 degree in (1), in the conventional structure, almost all magnetic force lines of a permanent magnet 232 corresponding to one magnetic pole of the rotor 205 flow through the adjacent tooth portion 26C, but in the structure of the embodiment, an only approximately half of the magnetic force lines of one permanent magnet 38 of the pair of permanent magnets 37, 38 constituting one magnetic pole flows through the tooth portion 26C. Moreover, at a rotation angle of 15 degrees, the magnetic force line flows through the tooth portion 26C in both the conventional structure and the present embodiment, whereby in the embodiment, the magnetic force line varies stepwise. Similarly, at a rotation angle of 30 degrees, in the conventional structure, almost all the magnetic force lines of a permanent magnet 233 corresponding to one magnetic pole of the rotor 205 flow through the adjacent tooth portion 26B, but in the present embodiment, an only approximately half of the magnetic force lines of one permanent magnet 40 of the pair of permanent magnets 39, 40 constituting one magnetic pole flows through the tooth portion 26B.

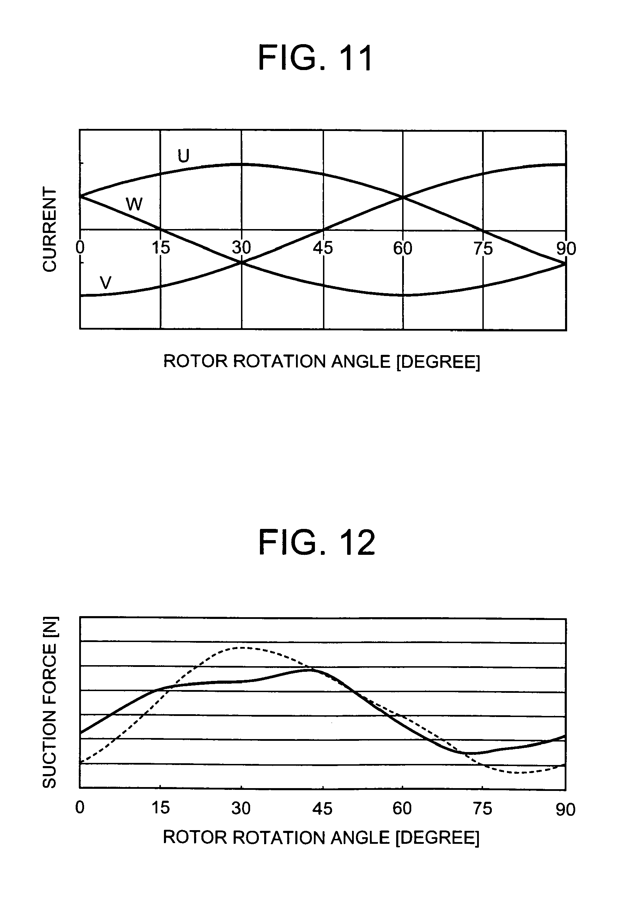

FIG. 11 is a diagram showing a three-phase sinusoidal wave, and in this case, FIG. 12 shows the variance of a suction force generated between the tooth portion 26 of the stator core 25 and the permanent magnets of the rotor 5 (a broken line shows that the conventional rotor 205 is used, and a solid line shows that the rotor 5 of the present embodiment is used). As shown in FIG. 12, in the structure of the embodiment in which the present invention is employed, it has been seen that the maximum value of the suction force decreases and the minimum value of the suction force increases as compared with the conventional structure. Therefore, it has been obvious from FIG. 12 that the variance of the suction force decreases in the present embodiment as compared with the conventional structure.

As described above in detail, according to the present invention, the suction force periodically applied in a concentrated manner can be decreased, thereby decreasing the variance of the suction force. In consequence, the deformation of the stator core 25 can be suppressed, and the generation of noises generated by the deformation can effectively be suppressed.

Moreover, the above invention is effective in a case where the permanent magnets 37 to 44 are rare earth magnets. That is, the rare earth magnets increase material cost and processing cost, and are used mainly in a planar shape (a flat plate-like shape). Therefore, the above invention is especially effective in a case where the permanent magnets 37 to 44 are the rare earth magnets. In particular, the rare earth permanent magnet has a magnet holding force larger than that of a ferrite permanent magnet having the same shape, and hence has problems that excitation of the stator due to the suction force increases and that the vibration is transmitted to a surrounding area, thereby increasing noises. However, according to the present invention, such a noise problem can effectively be suppressed.

Furthermore, when the outer peripheral surface of the rotor core 30 is provided with the cutout portions S as described above, the variance of the magnetic force line can be optimized, and the vibration of the stator 4 can be decreased.

(Embodiment 2)

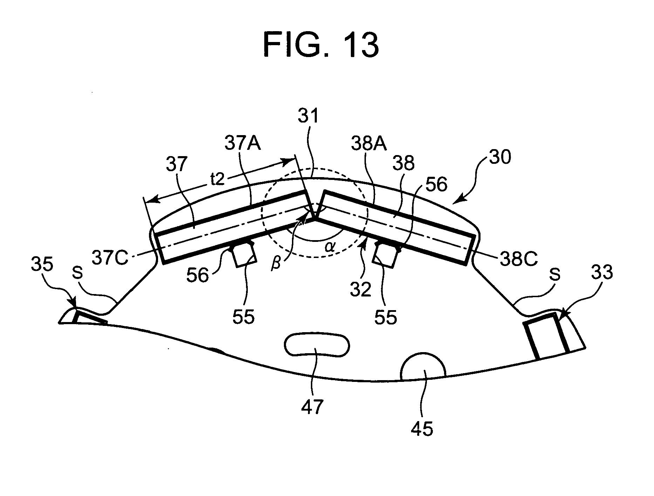

It is to be noted that in Embodiment 1 described above, each insertion hole (32) into which a pair of permanent magnets (e.g., permanent magnets 37, 38) constituting one magnetic pole are inserted is formed into such a V-shape as to project toward the outer periphery of the rotor core 30 as shown in FIG. 4, but the insertion holes of the present invention are not limited to this embodiment, and an insertion hole used exclusively for each permanent magnet may be formed. FIG. 13 is a partially enlarged view of a rotor for explaining one example of this case. One magnetic pole of four magnetic poles of the rotor is provided with a pair of insertion holes 37A, 38A, and the pair of insertion holes 37A, 38A are disposed in the form of a slanted roof when seen from the side of a rotary shaft 6.

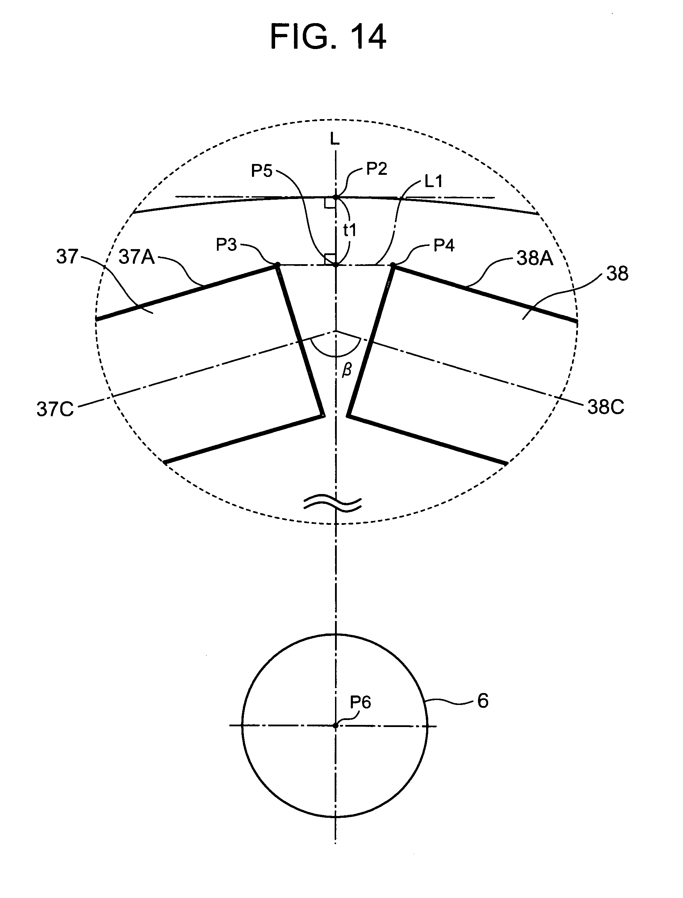

It is to be noted that here, as shown in FIG. 13, the pair of insertion holes 37A, 38A constituting one of the four magnetic poles of a rotor 5 and a pair of permanent magnets 37, 38 inserted into the insertion holes 37A, 38A will be described, and the description of the other insertion holes and permanent magnets 39 to 44 inserted into these insertion holes is omitted, but the insertion holes and the permanent magnets 39 to 44 have constitutions and arrangements similar to those of the insertion holes 37A, 38A and the permanent magnets 37, 38. FIG. 14 is an enlarged view of a broken line part of FIG. 13. It is to be noted that in FIGS. 13 and 14, the same reference numerals as those of FIGS. 1 to 12 indicate the same or similar functions or effects, and hence the description thereof is omitted.

In this case, the insertion holes 37A, 38A have such a constitution as to satisfy the above formula (1), in which $t1$ is the shortest distance from a center P5 of a line L1 connecting outer ends P3, P4 of the adjacent insertion holes 37A, 38A to an outer periphery P2 of a rotor core 30 and $t2$ is the width dimension of each of the permanent magnets 37, 38. It is to be noted that as shown in FIG. 14, the center P5 of the line L1 connecting the outer ends P3, P4 of the adjacent insertion holes 37A, 38A, the outer periphery P2 of the rotor core 30 and the axial center P6 of the rotary shaft 6 are present along the same straight line L, and the line L1 crosses the line L passing through the axial center P6 of the rotary shaft 6 and the center P5 of the line L1 at right angles.

In this way, also in the constitution of the present embodiment, magnetic force lines generated by the permanent magnets 37 to 44 can be scattered in the same manner as in Embodiment 1 described above. Moreover, a distance from the adjacent outer ends of the pair of permanent magnets inserted into the insertion holes to the outer periphery of the rotor core can be shortened, whereby the variance ratio of the magnetic force line flowing through the rotor core 30 can be decreased. In consequence, a suction force periodically applied in a concentrated manner can be decreased, thereby decreasing the variance of the suction force, whereby the deformation of the stator core 25 can be suppressed, and the generation of the noises by the deformation can effectively be suppressed.

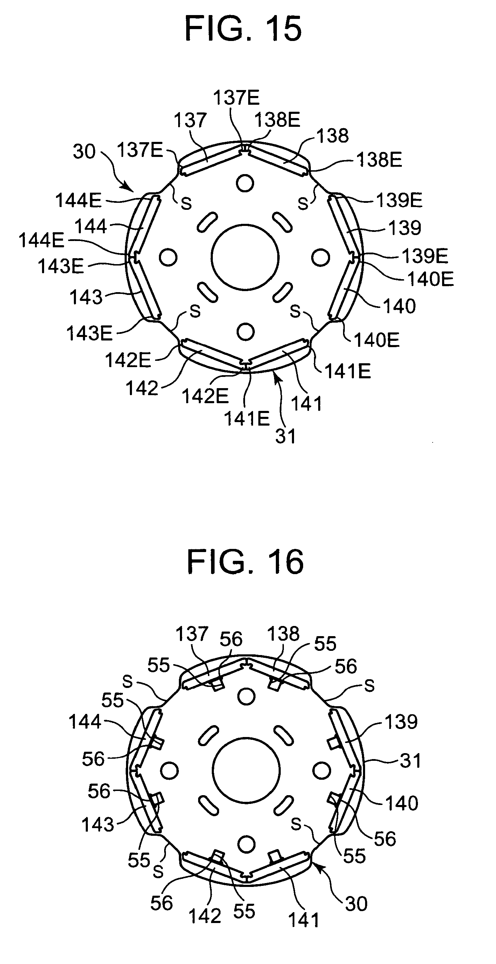

It is to be noted that when the insertion hole used exclusively for each permanent magnet is formed as in the present embodiment, the shape of the insertion hole is not limited to a shape shown in FIGS. 13 and 14, and as shown in FIGS. 15 and 16, the widths of both ends 137E, 137E to 144E, 144E of insertion holes 137 to 144 used exclusively for the permanent magnets on the side of the rotary shaft 6 may be decreased.

It is to be noted that reference numerals 55 shown in FIG. 16 are holes formed so as to extend through a plurality of rotor iron plates 31 positioned at both end faces of the rotor 5 and connected to the insertion holes 137 to 144 in the same manner as in the holes 55 described above with reference to FIGS. 5 and 13. Reference numerals 56 are thin fixing members provided between the holes 55 and the insertion holes 137 to 144 and configured to fix the permanent magnets 37 to 44 inserted into the insertion holes 137 to 144, respectively, in the same manner as in the fixing members 56 shown in FIG. 5. A method for fixing the permanent magnets 37 to 44 by the fixing members 56 is described above, and hence the description thereof is omitted here.

(Embodiment 3)

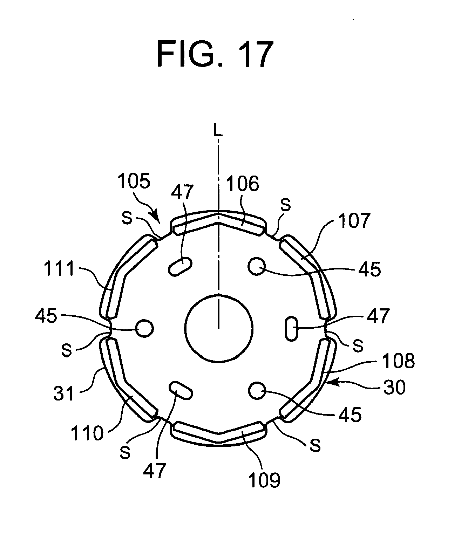

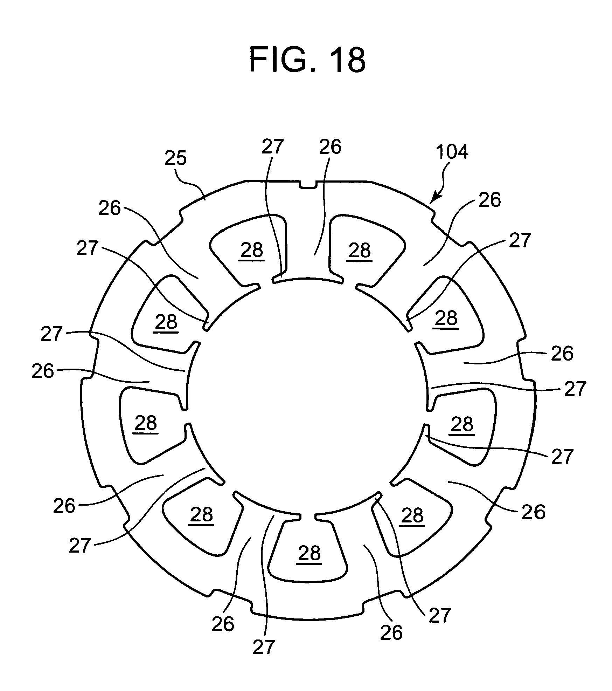

Moreover, in Embodiment 1 described above, as an electric motor, a four-pole permanent magnet rotary type electric motor is used in which a ratio between the number of poles of a rotor 5 and the number of slots of a stator 4 is 2:3. However, as shown in FIGS. 17 and 18, a six-pole permanent magnet rotary type electric motor may be used in which a ratio between the number of poles of a rotor 105 and the number of slots of a stator 104 is 2:3.

In this case, as shown in FIG. 17, the rotor 105 is provided with insertion holes 106 to 111 which have a rectangular shape and into which each pair of permanent magnets are inserted. In the same manner as in the insertion holes 32 to 35 of Embodiment 1 described above, the insertion holes 106 to 111 are provided along the axial direction of a rotary shaft 6, and are formed so that the center of each of the insertion holes 106 to 111 is positioned on the most distant outer peripheral side from the rotary shaft 6 side and so that each hole extends to both sides symmetrically with respect to a straight line (e.g., a broken line L) connecting the center of the insertion hole and the center (the axial center) of the rotary shaft 6. It is to be noted that in FIGS. 17, 18, the same reference numerals as those of FIGS. 1 to 16 indicate similar effects and functions, and hence the description thereof is omitted here.

Moreover, in the same manner as in Embodiment 1 described above, stator coils 7 of U-phase, V-phase and W-phase are successively directly wound around tooth portions 26 shown in FIG. 18, and a current is caused to flow through the wound stator coils 7 in order, whereby a driving force can be generated by an interaction of a varying magnetic field of the current and a magnetic field generated by permanent magnets (not shown) of the rotor 105.

**Claims**

1. A rotor of an electric motor, comprising: a rotor core formed by laminating a plurality of iron plates for the rotor; a pair of insertion holes corresponding to each magnetic pole of the rotor core and provided along the axial direction of a rotary shaft; and a pair of flat plate-like permanent magnets inserted into the insertion holes to constitute the magnetic pole,
   wherein the pair of insertion holes are disposed in the form of a slanted roof when seen from the side of the rotary shaft, and $0 < t1/t2 \leq 0.15$ is satisfied in which t1 is the shortest distance from the center of a line connecting outer ends of the adjacent insertion holes to the outer periphery of the rotor core and t2 is a width dimension of each permanent magnet.

2. A rotor of an electric motor, comprising: a rotor core formed by laminating a plurality of iron plates for the rotor; insertion holes corresponding to magnetic poles of the rotor core and provided along the axial direction of a rotary shaft; and a pair of flat plate-like permanent magnets inserted into each of the insertion holes to constitute the magnetic pole,
   wherein the insertion holes are formed into such a V-shape as to project toward the outer periphery of the rotor core, and $0 < t1/t2 \leq 0.15$ is satisfied in which t1 is the shortest distance from the outer end of the insertion hole to the outer periphery of the rotor core and t2 is a width dimension of each of the permanent magnets.

3. The rotor of the electric motor according to claim 1 or 2, wherein the permanent magnets are rare earth magnets.

4. The rotor of the electric motor according to any one of claims 1 to 3, wherein the outer peripheral surface of the rotor core in front of the magnetic pole in a rotating direction thereof is provided with cutout portions.

# FIG. 1

# FIG. 2

# FIG. 3

# FIG. 4

# FIG. 5

# FIG. 6

# FIG. 7

# FIG. 8

(1)

(2)

(3)

# FIG. 9

|  | CONVENTIONAL | PRESENT EMBODIMENT (PRESENT INVENTION) |
|---|---|---|
| 0 DEGREE | (1) <br> 205    4 | (1) <br> 4 <br> 5 |
| 15 DEGREES | (2) <br> 4 <br> 205 | (2) <br> 4 <br> 5 |
| 30 DEGREES | (3) <br> 4 <br> 205 | (3) <br> 4 <br> 5 |

# FIG. 10

| | CONVENTIONAL | PRESENT EMBODIMENT (PRESENT INVENTION) |
|---|---|---|
| 0 DEGREE | | |
| 15 DEGREES | | |
| 30 DEGREES | | |

# FIG. 11

ROTOR ROTATION ANGLE [DEGREE]

# FIG. 12

ROTOR ROTATION ANGLE [DEGREE]

EP 2 270 954 A2

# FIG. 13

19

# FIG. 14

# FIG. 15

# FIG. 16

# FIG. 17

# FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007174776 A
- JP 2008022666 A